# EUROPEAN PATENT APPLICATION

(11) **EP 4 727 147 A1**
(43) Date of publication of application: **15.04.2026**
(21) Application number: 24823048.4
(22) Date of filing: 13.03.2024
(51) Int. Cl.: H04N 23/60, G02B 7/28, G03B 7/091, G03B 13/36, G03B 15/00, H04N 23/611

(54) **IMAGING DEVICE, METHOD FOR CONTROLLING IMAGING DEVICE, PROGRAM, AND STORAGE MEDIUM**

(30) Priority: 12.06.2023 JP 2023096364
(71) Applicant: Canon Kabushiki Kaisha, Tokyo, 146-8501 (JP)
(72) Inventor: IMAI, Ryo, Tokyo 146-8501 (JP)
(74) Representative: TBK
(86) International application number: PCT/JP2024/009717
(87) International publication number: WO 2024/257425

(57) **Abstract**

An imaging device according to the present invention includes an imaging unit, and an AE unit configured to perform automatic exposure processing, wherein the AE unit stops the automatic exposure processing in a case where an object approaching the imaging device is captured by the imaging unit.

## Description

### [Technical Field]

The present invention relates to an imaging device, a method for controlling the imaging device, a program, and a storage medium.

### [Background Art]

In recent years, with the spread of moving image posting sites, there are increasing opportunities to produce a moving image content using a moving image taken by an individual as a material for the purpose of posting a moving image or the like (so-called Vlog) expressing a hobby, a daily event, or the like with a video and a voice. In the moving image content including a plurality of cuts, a video effect called transition may be used as a joint between the cuts. By using the transition, it is possible to smoothly or impressively perform switching between the cuts. The transition may be applied by operating a subject or a camera at the time of shooting, or may be applied by video editing software or the like after shooting.

As a transition applied at the time of shooting, a method of shielding a shooting lens with a shielding object such as a hand or a subject is used. The screen is darkened by shielding the shooting lens with the shielding object, and the front and rear cuts are connected between the darkened scenes, so that switching between the cuts can be smoothly shown. On the other hand, in a case where an automatic exposure adjustment mechanism of a camera is enabled, when the shooting lens is shielded by the shielding object, exposure is adjusted in accordance with a state in which the shooting lens is shielded. As a result, the screen does not sufficiently darken even though the shooting lens is shielded, and a shot moving image may be different from that as intended by a photographer.

PTL 1 discloses a method of controlling start and stop of shooting by determining whether a shooting lens is shielded.

### [Citation List]

### [Patent Literature]

[PTL 1] Japanese Patent Laid-Open No. 2011-65012

### [Summary of Invention]

### [Technical Problem]

In the technology disclosed in PTL 1, it is possible to start or stop the shooting of a moving image when a shooting lens is completely shielded, but exposure control when the shooting lens is shielded during shooting is not assumed. Therefore, when a photographer wants to darken the screen by shielding the shooting lens, it may be impossible to obtain an intended shooting result.

The present invention provides a technique to obtain, when it is desired to perform transition shooting of darkening a screen by shielding a shooting lens, a shooting result as intended by a photographer.

### [Solution to Problem]

An imaging device according to the present invention includes an imaging unit, and an AE unit configured to perform automatic exposure processing, wherein the AE unit stops the automatic exposure processing in a case where an object approaching the imaging device is captured by the imaging unit.

### [Advantageous Effects of Invention]

According to the present invention, it is possible to obtain, when it is desired to perform transition shooting of darkening a screen by shielding a shooting lens, a shooting result as intended by a photographer.

### [Brief Description of Drawings]

[Fig. 1]

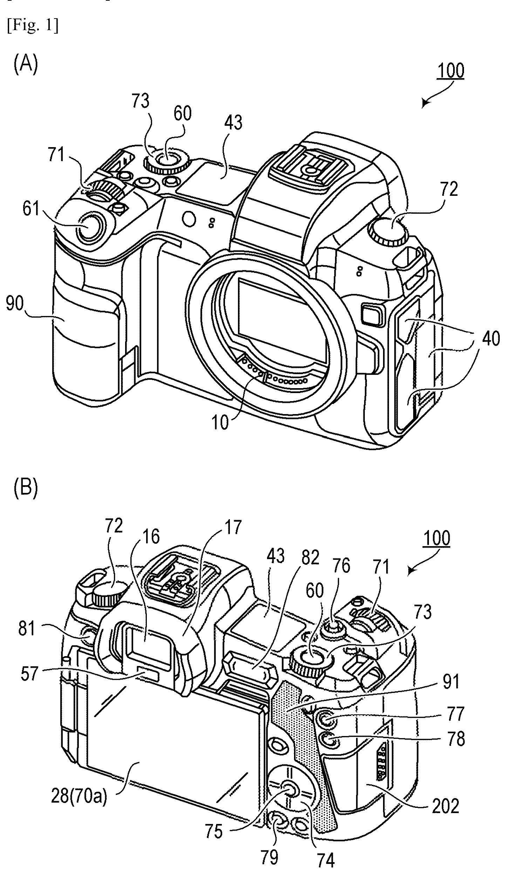

   Figs. 1A and 1B are external views illustrating a digital camera.
[Fig. 2]

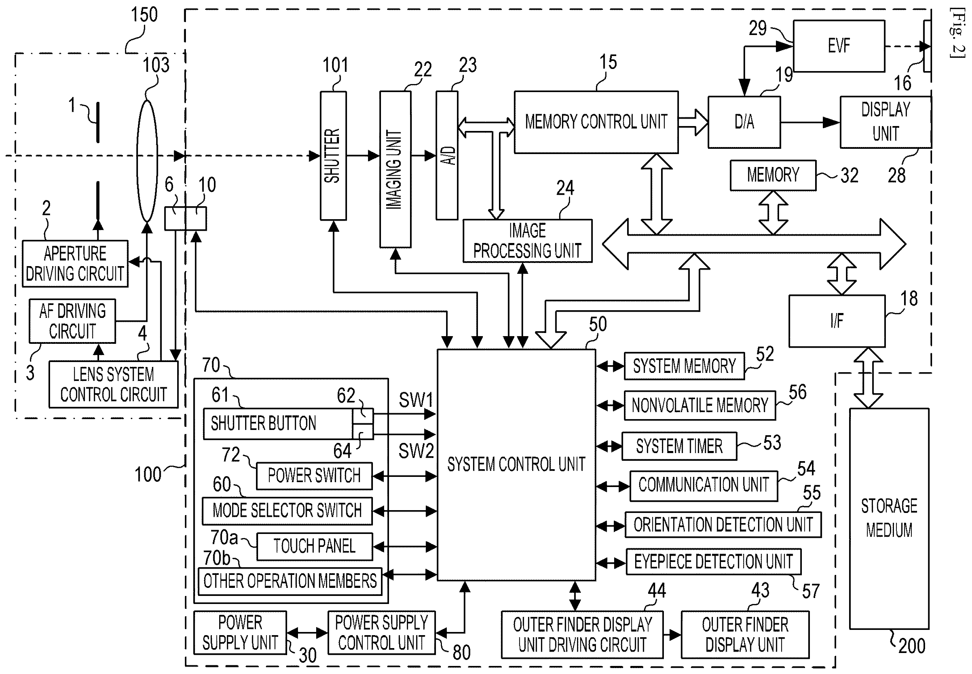

   Fig. 2 is a block diagram of the digital camera.
[Fig. 3]

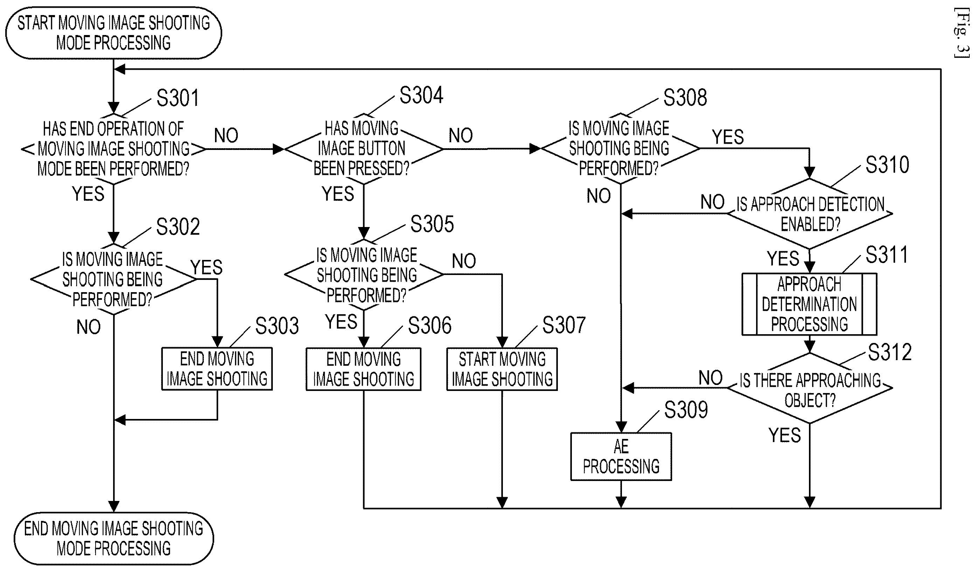

   Fig. 3 is a flowchart of moving image shooting processing.
[Fig. 4]

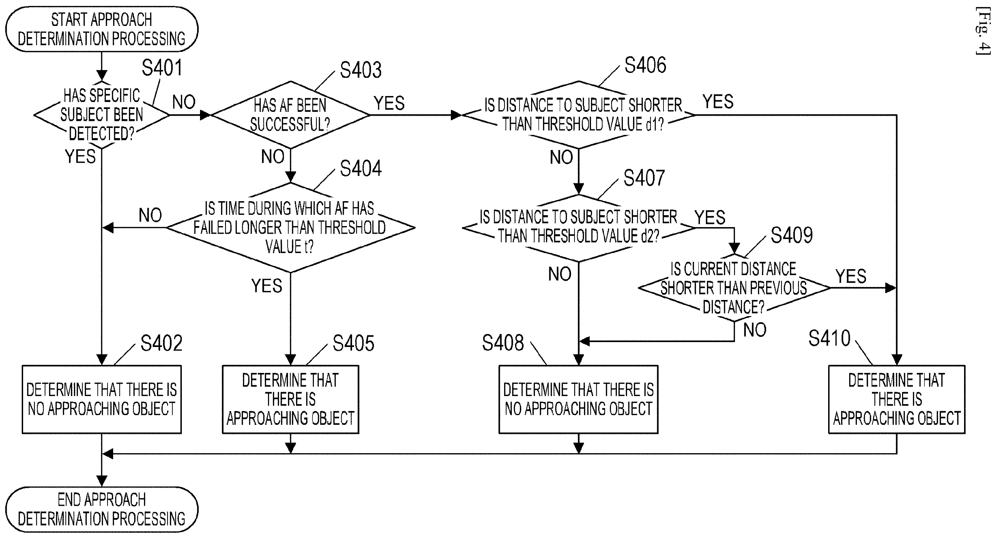

   Fig. 4 is a flowchart of approach determination processing.

### [Description of Embodiments]

Hereinafter, embodiments of the present invention are described with reference to the drawings. Figs. 1A and 1B are external views of a digital camera 100 as an example of an imaging device to which the present invention can be applied. Fig. 1A is a front perspective view illustrating the digital camera 100 and Fig. 1B is a rear perspective view illustrating the digital camera 100.

A display unit 28 is a display unit provided on a back surface of the digital camera 100 and displays an image and various types of information. A touch panel 70a can detect a touch operation on a display surface (touch operation surface) of the display unit 28. An outer finder display unit 43 is a display unit provided on an upper surface of the digital camera 100 and displays various setting values of the digital camera 100 including a shutter speed and an aperture. A shutter button 61 is an operation member for giving a shooting instruction. A mode selector switch 60 is an operation member for switching among various modes. A terminal cover 40 is a cover that protects a connector (not illustrated) with a connection cable or the like that connects the digital camera 100 to an external device.

A main electronic dial 71 is a rotation operation member, and a setting value such as a shutter speed or an aperture can be changed by turning the main electronic dial 71. A power switch 72 is an operation member for switching between ON and OFF of a power supply of the digital camera 100. A sub-electronic dial 73 is a rotation operation member. By turning the sub-electronic dial 73, movement of a selection frame (cursor), image feeding, or the like can be executed. A four-direction key 74 is configured to be pressable at each of upper, lower, left, and right portions, and processing corresponding to a pressed portion of the four-direction key 74 can be performed. A SET button 75 is a push button and is mainly used to determine a selection item.

A moving image button 76 is used for an instruction to start or stop moving image shooting (recording). An AE lock button 77 is a push button. By pressing the AE lock button 77 in a shooting standby state, an exposure state can be fixed. An enlargement button 78 is an operation button for switching between ON and OFF of an enlargement mode in live view display (LV display) of a shooting mode. By turning ON the enlargement mode and then operating the main electronic dial 71, a live view image (LV image) can be enlarged or reduced. In a reproduction mode, the enlargement button 78 functions as an operation button for enlarging a reproduction image or increasing its enlargement ratio. A reproduction button 79 is an operation button for switching between the shooting mode and the reproduction mode. During the shooting mode, the mode shifts to the reproduction mode by pressing the reproduction button 79, so that the latest one of images recorded in a storage medium 200 (described below) can be displayed on the display unit 28. A menu button 81 is a push button used to execute an instruction operation of displaying a menu screen. When the menu button 81 is pressed, a menu screen on which various settings can be executed is displayed on the display unit 28. A user can intuitively perform various settings by using the menu screen displayed on the display unit 28, the four-direction key 74, and the SET button 75. The user can change (customize) a function allocated to an operation member (such as a button or a rotation operation member) by changing the setting in the menu screen.

A touch bar 82 is a linear touch operation member (line touch sensor) that can receive a touch operation. The touch bar 82 is disposed at a position that enables a touch operation (touchable) with the thumb finger of the right hand in a state in which a grip portion 90 is gripped with the right hand (a state in which the grip portion is gripped with the little finger, the ring finger, and the middle finger of the right hand) such that the shutter button 61 can be pressed by the index finger of the right hand. That is, the touch bar 82 is disposed at a position where the touch bar 82 can be operated in a state in which the user places the eye close to an eyepiece portion 16, looks through an eyepiece viewfinder 17 with the eye, and holds up the digital camera so as to be able to press a shutter button 61 at any time (shooting orientation). The touch bar 82 is a receiving unit capable of receiving a tapping operation on the touch bar 82 (an operation of touching the touch bar and releasing the touch bar without moving a touch position within a predetermined period of time), a sliding operation to the left or right (an operation of touching the touch bar and then moving the touch position while keeping the touch), and the like. The touch bar 82 is an operation member that is different from the touch panel 70a and does not have a display function. The touch bar 82 functions as, for example, a multi-function bar (M-Fn bar) to which various functions can be allocated.

A communication terminal 10 is a communication terminal that causes the digital camera 100 to execute communication with a lens unit 150 (detachable as will be described below) side. The eyepiece portion 16 is an eyepiece portion of the eyepiece viewfinder 17 (viewing-type finder), and the user can view a video displayed in an EVF 29 (described below; an electronic viewfinder) via the eyepiece portion 16. An eye-approach detection unit 57 is an eyepiece detection sensor that detects whether an eye of the user (a person who executes shooting) is looking into the eyepiece portion 16. A lid 202 is a lid of a slot that stores the storage medium 200 (to be described below). The grip portion 90 is a holding portion formed into a shape allowing the user to easily grip the grip portion 90 with the right hand when the user holds up the digital camera 100. The shutter button 61 and the main electronic dial 71 are located at positions enabling the user to operate the shutter button 61 and the main electronic dial 71 with the index finger of the right hand in a state in which the user holds the digital camera 100 while gripping the grip portion 90 with the little finger, the ring finger, and the middle finger of the right hand. Further, in the same state, the sub-electronic dial 73 and the touch bar 82 are arranged at positions enabling the user to operate the sub-electronic dial 73 and the touch bar 82 with the thumb finger of the right hand. A thumb rest portion 91 (thumb standby position) is a grip portion provided at a place allowing the user to easily place the thumb finger of the right hand that grips the grip portion 90 on the back surface side of the digital camera 100 in a state in which any of the operation members is not operated. The thumb rest portion 91 is configured with a rubber member for enhancement of holding power (gripping feeling).

Fig. 2 is a block diagram illustrating a configuration of the digital camera 100. The lens unit 150 is a lens unit equipped with an interchangeable shooting lens. A lens 103 is usually configured with a plurality of lenses, but only one lens in a simplified manner is illustrated in Fig. 2. A communication terminal 6 is a communication terminal which causes the lens unit 150 to communicate with the digital camera 100 side. The communication terminal 10 is a communication terminal that causes the digital camera 100 to communicate with the lens unit 150 side. The lens unit 150 communicates with a system control unit 50 via the communication terminals 6 and 10. Then, the lens unit 150 controls an aperture 1 via an aperture driving circuit 2 by an internal lens system control circuit 4. Furthermore, the lens unit 150 adjusts the focus by displacing the lens 103 via an AF driving circuit 3 by the lens system control circuit 4.

A shutter 101 is a focal plane shutter that can freely control the exposure time of an imaging unit 22 under the control of the system control unit 50.

The imaging unit 22 is an imaging element (image sensor) configured with a CCD, a CMOS element, or the like that converts an optical image into an electrical signal. The imaging unit 22 may include an imaging-surface phase-difference sensor that outputs defocus amount information to the system control unit 50. An A/D converter 23 converts an analog signal output from the imaging unit 22 into a digital signal.

An image processing unit 24 executes predetermined processing (such as pixel interpolation, resizing processing such as reduction, or color conversion processing) on data from the A/D converter 23 or data from a memory control unit 15. The image processing unit 24 executes predetermined arithmetic processing by using captured image data, and the system control unit 50 executes exposure control and distance measurement control based on a calculation result obtained by the image processing unit 24. Accordingly, through-the-lens (TTL) type autofocus (AF) processing, auto exposure (AE) processing, flash pre-emission (EF) processing, and the like are executed. The image processing unit 24 executes predetermined arithmetic processing by using the captured image data and executes TTL-type auto white balance (AWB) processing based on the obtained calculation result.

The memory control unit 15 controls transmission and reception of data among the A/D converter 23, the image processing unit 24, and a memory 32. Output data from the A/D converter 23 is written into a memory 32 via the image processing unit 24 and the memory control unit 15. Alternatively, the output data from the A/D converter 23 is written to the memory 32 via the memory control unit 15 without being involved in the image processing unit 24. The memory 32 stores image data which is obtained by the imaging unit 22 and is converted into digital data by the A/D converter 23 and image data to be displayed on the display unit 28 or the EVF 29. The memory 32 has a storage capacity that is sufficient for storing a predetermined number of still images and moving image and voice in a predetermined period of time.

In addition, the memory 32 also serves as a memory for image display (video memory). A D/A converter 19 converts image data for display stored in the memory 32 into an analog signal and supplies the analog signal to the display unit 28 or the EVF 29. In this way, the image data for display that is written to the memory 32 is displayed by the display unit 28 or the EVF 29 via the D/A converter 19. Each of the display unit 28 and the EVF 29 is a display such as an LCD or an organic EL and executes display corresponding to an analog signal from the D/A converter 19. By causing the D/A converter 19 to convert digital signals A/D-converted by the A/D converter 23 and accumulated in the memory 32 into analog signals and sequentially transferring the analog signals and displaying the analog signals on the display unit 28 or the EVF 29, it is possible to execute live view display (LV). Hereinafter, an image displayed in live view display is referred to as a live view image (LV image).

The system control unit 50 is a control unit including at least one processor and/or at least one circuit, and controls the digital camera 100 overall. The system control unit 50 serves as a processor and also a circuit. The system control unit 50 implements processing to be described later by executing a program recorded in a nonvolatile memory 56. The system control unit 50 also executes display control by controlling the memory 32, the D/A converter 19, the display unit 28, the EVF 29, and the like.

A system memory 52 is, for example, a RAM, and the system control unit 50 loads constants, variables, programs read from the nonvolatile memory 56, and the like for an operation of the system control unit 50 into the system memory 52.

The nonvolatile memory 56 is an electrically erasable and recordable memory and is, for example, an EEPROM. In the nonvolatile memory 56, constants for operations of the system control unit 50, programs, and the like are recorded. The program as used herein is a program for executing various flowcharts to be described later.

A system timer 53 is a timer unit that counts time used for various controls and time of a built-in clock.

A communication unit 54 transmits and receives a video signal and a voice signal to and from an external device connected thereto wirelessly or via a wired cable. The communication unit 54 can also be connected to a wireless local area network (LAN) and the Internet. In addition, the communication unit 54 can communicate with an external device also via Bluetooth (registered trademark) and Bluetooth Low Energy (registered trademark). The communication unit 54 can transmit an image (including an LV image) captured by the imaging unit 22 and an image recorded in the storage medium 200 and can receive image data and other various types of information from an external device.

An orientation detection unit 55 detects an orientation of the digital camera 100 with respect to the direction of gravity. Based on the orientation detected by the orientation detection unit 55, it can be determined whether an image shot by the imaging unit 22 is an image shot with the digital camera 100 held horizontally or an image shot with the digital camera 100 held vertically. The system control unit 50 can add direction information corresponding to the orientation detected by the orientation detection unit 55 to an image file of the image captured by the imaging unit 22, or rotate and record the image. An acceleration sensor, a gyro sensor, or the like can be used as the orientation detection unit 55. It is also possible to detect movement of the digital camera 100 (whether the digital camera is panning, tilting, lifting, stationary, or the like) by using an acceleration sensor or a gyro sensor which is the orientation detection unit 55.

The eye-approach detection unit 57 is an eye-approach detection sensor that detects approach (eye approach) and separation (eye separation) of an eye (object) (approach detection) with respect to the eyepiece portion 16 of the eyepiece viewfinder 17 (hereinafter, simply referred to as a "finder"). The system control unit 50 switches between display (display state) and non-display (non-display state) of each of the display unit 28 and the EVF 29 according to the state detected by the eye-approach detection unit 57. More specifically, in a case where at least the shooting standby state is established, and a switching setting for a display destination is set to automatic switching, while an eye is not approached, the display is turned on with the display destination set as the display unit 28, and the EVF 29 executes non-display. While an eye is approached, the display is turned on with the display destination set as the EVF 29, and the display unit 28 executes non-display. For example, an infrared proximity sensor can be used as the eye-approach detection unit 57, and the approach of any object to the eyepiece portion 16 of the eyepiece viewfinder 17 having the EVF 29 embedded therein can be detected. When an object approaches the eyepiece portion, infrared light emitted from a light-emitting unit (not illustrated) of the eye-approach detection unit 57 is reflected from the object and is received by a light-receiving unit (not illustrated) of an infrared proximity sensor. A distance by which the object approaches from the eyepiece portion 16 (eye-approach distance) can also be determined based on an amount of received infrared light. In this way, the eye-approach detection unit 57 executes eye approach detection to detect a proximity distance of the object to the eyepiece portion 16. When an object which approaches the eyepiece portion 16 within a predetermined distance is detected from the non-eye-approach state (non-approach state), it is detected that the eye approaches the eyepiece portion. It is assumed that, when the object of which the approach is detected is separated from the eye-approach state (approach state) by a predetermined distance or more, it is detected that the eye is separated from the eyepiece portion. A threshold value for detecting eye approach and a threshold value for detecting eye separation may be set to be different by providing, for example, a hysteresis. After the eye approach is detected, the eye-approach state is assumed until the eye separation is detected. After the eye separation is detected, the non-eye-approach state is assumed until the eye approach is detected. Note that the infrared proximity sensor is an example, and other sensors may be adopted as the eye-approach detection unit 57 as long as the sensors can detect a state that can be regarded as the eye approach.

Various setting values of the camera including the shutter speed and the aperture are displayed on the outer finder display unit 43 via an outer finder display unit driving circuit 44.

A power supply control unit 80 includes a battery detection circuit, a DC-DC converter, and a switch circuit that switches a block to be electrified, and detects whether a battery is mounted, a type of battery, a remaining battery level, or the like. In addition, the power supply control unit 80 controls the DC-DC converter based on the detection result and an instruction from the system control unit 50 and supplies a required voltage to each unit including the storage medium 200 for a necessary period of time. A power supply unit 30 includes a primary battery such as an alkaline battery or a lithium battery, a secondary battery such as a NiCd battery, a NiMH battery, or a Li battery, an AC adapter, or the like.

A storage medium I/F 18 is an interface with the storage medium 200 such as a memory card or a hard disk. The storage medium 200 is a storage medium such as a memory card in which a shot image is recorded, and is configured with a semiconductor memory, a magnetic disk, or the like.

An operation unit 70 is an input unit that receives an operation from a user (user operation) and is used for inputting various operation instructions to the system control unit 50. As illustrated in Fig. 2, the operation unit 70 includes the mode selector switch 60, the shutter button 61, the power switch 72, the touch panel 70a, other operation members 70b, and the like. The other operation members 70b include the main electronic dial 71, the sub-electronic dial 73, the four-direction key 74, the SET button 75, the moving image button 76, the AE lock button 77, the enlargement button 78, the reproduction button 79, the menu button 81, the touch bar 82, and the like.

The mode selector switch 60 switches an operation mode of the system control unit 50 to any of a still image shooting mode, a moving image shooting mode, and a reproduction mode. Examples of the still image shooting mode include an auto shooting mode, an auto scene determination mode, a manual mode, an aperture-priority mode (Av mode), a shutter-speed priority mode (Tv mode), and a program AE mode (P mode). There are also various scene modes and custom modes serving as shooting settings for each shooting scene. The user can directly switch the operation mode to any one of these modes with the mode selector switch 60. Alternatively, the user may temporarily switch a screen to a list screen of a shooting mode with the mode selector switch 60 and then selectively switch the mode to any one of the plurality of displayed modes with another operation member. Similarly, the moving image shooting mode may include a plurality of modes.

The shutter button 61 includes a first shutter switch 62 and a second shutter switch 64. The first shutter switch 62 is turned ON during an operation of the shutter button 61, that is, a so-called half push (shooting preparation instruction), to generate a first shutter switch signal SW1. The system control unit 50 starts the shooting preparation operation such as autofocus (AF) processing, automatic exposure (AE) processing, automatic white balance (AWB) processing, or flash pre-emission (EF) processing by the first shutter switch signal SW1. The second shutter switch 64 is turned ON by completion of the operation of the shutter button 61, that is, a so-called full push (shooting instruction), to generate a second shutter switch signal SW2. The system control unit 50 starts a series of shooting processing operations from reading a signal from the imaging unit 22 to writing a captured image as an image file to the storage medium 200, by the second shutter switch signal SW2.

The touch panel 70a is a touch sensor that detects various touch operations on a display surface of the display unit 28 (an operation surface of the touch panel 70a). The touch panel 70a and the display unit 28 can be formed to be integrated with each other. For example, the touch panel 70a is configured so that transmittance of light does not hinder display of the display unit 28, and is attached to an upper layer of the display surface of the display unit 28. Input coordinates on the touch panel 70a are associated with display coordinates on the display surface of the display unit 28. In this way, a graphical user interface (GUI) can be provided as if a user can directly operate the screen displayed on the display unit 28.

The system control unit 50 can detect the following operations on the touch panel 70a or the following states of the touch panel 70a.
- an operation in which a finger or a pen that has not touched the touch panel 70a newly touches the touch panel 70a, that is, a start of a touch (hereinafter, referred to as touch-down)
- a state in which a finger or a pen is touching the touch panel 70a (hereinafter, referred to as touch-on)
- an operation in which a finger or a pen is moving while touching the touch panel 70a (hereinafter, referred to as touch-move)
- an operation in which a finger or a pen that has touched the touch panel 70a is released from the touch panel 70a, that is, an end of the touch (hereinafter, referred to as touch-up)
- a state in which nothing touches the touch panel 70a (hereinafter, referred to as touch-off)

When the touch-down is detected, the touch-on is detected at the same time. After the touch-down, the touch-on is continuously detected normally unless the touch-up is detected. Also, when the touch-move is detected, the touch-on is continuously detected. Even if the touch-on is detected, the touch-move is not detected as long as the touch position is not moved. After the touch-up of all the fingers and the pens that have touched the touch panel 70a is detected, the state transitions to the touch-off.

The system control unit 50 is notified of these operations and states and position coordinates touched by a finger or a pen on the touch panel 70a via an internal bus. Then, the system control unit 50 determines, based on the notified information, what kind of operation (touch operation) has been performed on the touch panel 70a. With regard to the touch-move, a movement direction of a finger or a pen moving on the touch panel 70a can be determined based on a change in the position coordinates for each vertical component and for each horizontal component on the touch panel 70a. When the touch-move for a predetermined distance or more is detected, it is determined that a sliding operation has been performed. An operation of quickly moving a finger by a certain distance while touching the touch panel 70a and releasing the finger is referred to as a flick. In other words, the flick is an operation of quickly tracing the touch panel 70a so as to flick the touch panel 70a with a finger. When the touch-move at a predetermined speed or higher for a predetermined distance or more is detected and then the touch-up is detected, it can be determined that a flick has been performed (it can be determined that a flick has been performed following the sliding operation). Furthermore, a touch operation in which a plurality of places (for example, two points) are both touched (multi-touched) and the touch positions are brought close to each other is referred to as pinch-in, and a touch operation in which the touch positions are moved away from each other is referred to as pinch-out. The pinch-out and the pinch-in are collectively referred to as a pinch operation (or simply referred to as a pinch). The touch panel 70a may be any type of touch panel among various types such as a resistive film type, a capacitance type, a surface acoustic wave type, an infrared light type, an electromagnetic induction type, an image recognition type, and an optical sensor type. Although there are types including a type in which a touch is detected due to contact with the touch panel and a type in which a touch is detected due to approach of a finger or a pen to the touch panel, either of these types may be used.

Fig. 3 is a flowchart of moving image shooting mode processing performed by the digital camera 100. The processing of Fig. 3 is a series of processing until the digital camera 100 executes moving image shooting and completes moving image shooting. This processing is implemented by loading, by the system control unit 50, a program stored in the nonvolatile memory 56 in the system memory 52 and executing the program. For example, when the digital camera 100 is activated in the moving image shooting mode in response to the operation of the power switch 72 or the mode of the digital camera 100 is switched to the moving image shooting mode in response to the operation of the mode selector switch 60, the processing of Fig. 3 is started. The processing of Fig. 3 is processing of detecting an approach of an object to the digital camera 100 (the surface on the side on which the lens unit 150 is mounted (lens surface)) during moving image shooting and controlling automatic exposure processing (AE processing). Hereinafter, description of processing not related to such processing will be omitted. When an abnormal system operation is performed during the processing of Fig. 3, the processing of Fig. 3 may be interrupted.

In S301, the system control unit 50 determines whether an end operation of the moving image shooting mode has been performed. The end operation is, for example, an operation of switching the mode of the digital camera 100 to another mode (operation of the mode selector switch 60) or an operation of turning off the power of the digital camera 100 (operation of the power switch 72). When the end operation has been performed, the processing proceeds to S302, and when the end operation has not been performed, the processing proceeds to S304.

In S302, the system control unit 50 determines whether moving image shooting is being performed. When the moving image shooting is being performed, the processing proceeds to S303, and when the moving image shooting is not being performed, the moving image shooting mode processing ends.

In S303, the system control unit 50 ends the signal reading from the imaging unit 22 and performs moving image shooting end processing. In the moving image shooting end processing, the system control unit 50 acquires shot moving image data from the memory 32 and records the same in the storage medium 200 via the storage medium I/F 18.

In S304, the system control unit 50 determines whether the moving image button 76 has been pressed. When the moving image button 76 has been pressed, the processing proceeds to S305, and when the moving image button 76 has not been pressed, the processing proceeds to S308.

In S305, the system control unit 50 determines whether moving image shooting is being performed. When the moving image shooting is being performed, the processing proceeds to S306, and when the moving image shooting is not being performed, the processing proceeds to S307.

In S306, the system control unit 50 ends the signal reading and the like from the imaging unit 22 and performs the moving image shooting end processing.

In S307, the system control unit 50 starts the signal reading and the like from the imaging unit 22 and performs moving image shooting start processing. In the moving image shooting, the system control unit 50 causes the A/D converter 23 to convert data from the imaging unit 22, and records the converted data in the memory 32 as moving image data via the image processing unit 24 and the memory control unit 15.

In S308, the system control unit 50 determines whether the moving image shooting is being performed. When the moving image shooting is being performed, the processing proceeds to S310, and when the moving image shooting is not being performed, the processing proceeds to S309.

In S309, the system control unit 50 performs AE processing based on the calculation result of the image processing unit 24. For example, the system control unit 50 determines, based on the calculation result of the image processing unit 24, whether exposure of an image obtained by the imaging unit 22 is appropriate. Then, when the exposure of the image is not appropriate, the system control unit 50 controls at least one of the exposure time of the imaging unit 22, sensitivity of the imaging unit 22, and an aperture diameter of the aperture 1 so as to obtain an image with appropriate exposure. A case in which the exposure of the image is not appropriate is a case in which brightness of the image is brighter or darker than desired brightness, and the properly exposed image is an image with desired brightness.

In the present embodiment, it is assumed that the system control unit 50 can switch, in response to a user operation, between enabling and disabling of an approach detection function of detecting an approach of an object to the digital camera 100. As described above, the system control unit 50 can set, in response to the user operation, any one of the plurality of modes including a mode in which the approach detection function is enabled and a mode in which the approach detection function is disabled. In S310, the system control unit 50 determines whether the approach detection function is enabled. When the approach detection function is enabled, the processing proceeds to S311, and when the approach detection function is not enabled, the processing proceeds to S309.

In step S311, the system control unit 50 performs approach determination processing of determining whether there is an object that has approached the digital camera 100 (the surface on the side on which the lens unit 150 is mounted (lens surface)). Details of the approach determination processing will be described later with reference to Fig. 4.

In S312, the system control unit 50 determines whether there is an object that has approached the digital camera 100 according to the processing result in S311. When there is an approaching object, the processing proceeds to S301, and when there is no approaching object, the processing proceeds to S309.

Fig. 4 is a flowchart of the approach determination processing performed by the digital camera 100 in step S311 in Fig. 3. This processing is implemented by loading, by the system control unit 50, a program stored in the nonvolatile memory 56 in the system memory 52 and executing the program.

In the present embodiment, the system control unit 50 uses the image processing unit 24 to perform processing of detecting a specific subject (for example, human, face, or eye) from an image obtained by the imaging unit 22. Note that a method of detecting a specific subject is not particularly limited as long as the specific subject can be detected from at least a part of an imaging range of the digital camera 100. In S401, the system control unit 50 determines whether a specific subject has been detected. When the specific subject is detected, the processing proceeds to S402, and when the specific subject is not detected, the processing proceeds to S403.

In step S402, the system control unit 50 determines that there is no object that has approached the digital camera 100. Here, when a specific subject (for example, human, face, or eye) is detected in S401, it is determined that there is no approaching object because the object is not approaching so as to cover the imaging range.

In S403, the system control unit 50 determines whether the autofocus processing (AF processing) has succeeded based on the calculation result of the image processing unit 24. When the AF processing is successful (when the object is in focus), the processing proceeds to S406, and when the AF processing is not successful, the processing proceeds to S404.

In the present embodiment, it is assumed that the system control unit 50 measures the time during which the AF processing has failed using the system timer 53. In S404, the system control unit 50 determines whether the time during which the AF processing has failed is longer than a threshold value t. The number of consecutive failures in the AF processing may be used as the time during which the AF processing has failed. When the time during which the AF processing has failed is longer than the threshold value t, the processing proceeds to S405, and when the time during which the AF processing has failed is not longer than the threshold value t, the processing proceeds to S402. The threshold value t may be a predetermined fixed value or a value changeable by the user.

In step S405, the system control unit 50 determines that there is a subject that has approached the digital camera 100. When the time during which the AF processing has failed is longer than the threshold value t, it is determined that there is an approaching subject because a state in which an object approaches the imaging range is continued. On the other hand, when the time during which the AF processing has failed is shorter than the threshold value t, there may be a case in which AF is temporarily disabled instead of darkening the screen by shielding the shooting lens, and thus it is determined that there is no approaching subject.

In the present embodiment, it is assumed that the system control unit 50 detects a distance between a subject (an object captured by the imaging unit 22) and the digital camera 100. A method of detecting the distance is not particularly limited, and various known techniques can be used for detecting the distance. When the distance is detected, the position of the lens unit 150 may be used as the position of the digital camera 100. In step S406, the system control unit 50 determines, based on the calculation result of the image processing unit 24, whether the distance between the subject and the digital camera 100 is shorter than a threshold value d1. When the distance is shorter than the threshold value d1, the processing proceeds to S410, and when the distance is not shorter than the threshold value d1, the processing proceeds to S407. The threshold value d1 may be a predetermined fixed value or a value changeable by the user.

In step S407, the system control unit 50 determines, based on the calculation result of the image processing unit 24, whether the distance between the subject and the digital camera 100 is shorter than a threshold value d2 (> the threshold value d1). When the distance is shorter than the threshold value d2, the processing proceeds to S409, and when the distance is not shorter than the threshold value d2, the processing proceeds to S408. The threshold value d2 may be a predetermined fixed value or a value changeable by the user.

In step S408, the system control unit 50 determines that there is no object that has approached the digital camera 100.

In step S409, the system control unit 50 determines whether a current distance (current calculation result) between the subject and the digital camera 100 detected in step S407 is shorter than a previous distance (previous calculation result) (whether the distance is decreasing). When the current distance is shorter than the previous distance, the processing proceeds to S410, and when the current distance is not shorter than the previous distance, the processing proceeds to S408.

In step S410, the system control unit 50 determines that there is an object that has approached the digital camera 100.

As described above, according to the present embodiment, the AE processing is stopped when an object that has approached the digital camera 100 is captured. Then, when an object that has approached the digital camera 100 and has shielded the shooting lens no longer shields the shooting lens (for example, an object that was approaching within the imaging range has moved out of the imaging range and is no longer captured, or an object that was approaching has moved away from the shooting lens or the digital camera 100), the AE processing is restarted. In this way, it is possible to obtain suitable exposure during normal moving image recording, and it is possible to obtain a shooting result of exposure as intended by a photographer even in a case where it is desired to perform transition shooting of darkening the screen by bringing an object close and shielding the lens unit 150.

Note that the system control unit 50 may issue a predetermined notification to the user when the AE processing is stopped. The predetermined notification is, for example, a notification indicating that the AE processing is stopped. A notification method is not particularly limited, and for example, the predetermined notification may be display of an icon or a character string, output of a voice, or lighting of a lamp.

In addition, although an example in which the AE processing is not stopped when the moving image shooting is not being performed has been described, the execution and stop of the AE processing may be switched according to the result of the approach determination processing regardless of whether the moving image shooting is being performed. Even in a case where an object that has approached the digital camera 100 is captured by the imaging unit 22, the AE processing may not be stopped in a case where the object approaches the digital camera 100 outside a predetermined range which is a part of the imaging range of the imaging unit 22. The predetermined range is, for example, a range of an AE processing target (range to be referred to in AE processing (sampling of brightness is performed) and to be properly exposed). The predetermined range may be a range designated by the user. Only the inside of the predetermined range may be referred to in S401, S403, S406, and S407. For example, in S401, it may be determined whether a specific subject has been detected within the predetermined range. In S402, it may be determined whether the subject is in focus inside the predetermined range. In S406 and S407, the distance between the subject present inside the predetermined range and the digital camera 100 may be compared with the threshold values d1 and d2.

The above-described various types of control described as being performed by the system control unit 50 may be performed by at least one piece of hardware (for example, at least one processor and/or at least one circuit). One piece of hardware may control the entire device, or a plurality of pieces of hardware may share a process to control the entire device.

Although the embodiments of the present invention are described in detail, the present invention is not limited by these specific embodiments. Various forms in the range without departing from the gist of the invention shall also be encompassed by the present invention. Each of the above-described embodiments merely illustrates an embodiment of the present invention, and the embodiments can be combined as necessary.

In the above-described embodiment, the case where the present invention is applied to the digital camera has been described as an example, but the present invention is not limited to this example, and can be applied to any imaging device capable of performing the automatic exposure processing. For example, the present invention is applicable to a personal computer, a PDA, a mobile phone terminal, a portable image viewer, a printer apparatus, a digital photo frame, a music player, a game console, and an electronic book reader. The present invention is also applicable to a video player, a display device (including a projection device), a tablet terminal, a smartphone, an AI speaker, a home appliance, and an in-vehicle device.

### <Other embodiments>

The present invention can also be realized by supplying a program for realizing one or more of the functions of the embodiment described above to a system or a device via a network or a storage medium and having one or more processors in a computer of the system or the device read and execute the program. Further, the present invention can also be realized by a circuit (an ASIC, for example) for realizing one or more functions.

The disclosure of the present embodiment includes the following configurations, a method, a program and a medium.

### (Configuration 1)

An imaging device comprising:
an imaging unit; and
an AE unit configured to perform automatic exposure processing,
wherein the AE unit stops the automatic exposure processing in a case where an object approaching the imaging device is captured by the imaging unit.

### (Configuration 2)

The imaging device according to configuration 1, wherein the AE unit stops the automatic exposure processing in response to that the object approaches the imaging device within an imaging range of the imaging unit, and resumes, after the automatic exposure processing is stopped, the automatic exposure processing in response to that the object moves out of the imaging range or the object moves away from the imaging device.

### (Configuration 3)

The imaging device according to configuration 1 or 2, wherein the AE unit stops the automatic exposure processing in a case where a distance between the object captured by the imaging unit and the imaging device is shorter than a first threshold value.

### (Configuration 4)

The imaging device according to any one of configurations 1 to 3, wherein the AE unit stops the automatic exposure processing in a case where a distance between the object captured by the imaging unit and the imaging device is shorter than a second threshold value and the distance decreases.

### (Configuration 5)

The imaging device according to configuration 4, wherein the AE unit does not stop the automatic exposure processing in a case where the distance between the object captured by the imaging unit and the imaging device is shorter than the second threshold value but the distance does not decrease.

### (Configuration 6)

The imaging device according to any one of configurations 1 to 5, wherein the AE unit performs the automatic exposure processing in a case where a distance between the object captured by the imaging unit and the imaging device is longer than a second threshold value.

### (Configuration 7)

The imaging device according to any one of configurations 1 to 6, further comprising an AF unit configured to perform autofocus processing,
wherein the AE unit stops the automatic exposure processing in a case where time during which the autofocus processing fails is longer than a third threshold value.

### (Configuration 8)

The imaging device according to any one of configurations 1 to 7, further comprising a detection unit configured to detect a specific subject from an imaging range of the imaging unit,
wherein the AE unit does not stop the automatic exposure processing in a case where the specific subject is detected by the detection unit.

### (Configuration 9)

The imaging device according to configuration 8, wherein the specific subject is a face.

### (Configuration 10)

The imaging device according to any one of configurations 1 to 9, further comprising a setting unit configured to set, in response to a user operation, any one of a plurality of modes including a first mode in which the automatic exposure processing is stopped in a case where the object approaching the imaging device is captured and a second mode in which the automatic exposure processing is not stopped in a case where the object approaching the imaging device is captured.

### (Configuration 11)

The imaging device according to any one of configurations 1 to 10, further comprising a control unit configured to, in a case where the AE unit stops the automatic exposure processing, perform control to issue a predetermined notification.

### (Configuration 12)

The imaging device according to any one of configurations 1 to 11, wherein the AE unit does not stop the automatic exposure processing in a case where a moving image is not shot by the imaging unit.

### (Configuration 13)

The imaging device according to any one of configurations 1 to 12, wherein, in a case where the object approaching the imaging device is captured by the imaging unit but the object approaches the imaging device outside a predetermined range which is a part of an imaging range of the imaging unit, the AE unit does not stop the automatic exposure processing.

### (Configuration 14)

The imaging device according to configuration 12, wherein the predetermined range is a range of a target of the automatic exposure processing.

### (Method)

A method for controlling an imaging device, comprising:
an imaging step of performing image capturing; and
an AE step of performing automatic exposure processing,
wherein in the AE step, the automatic exposure processing is stopped in a case where an object approaching the imaging device is captured in the imaging step.

### (Program)

A program that causes a computer to function as each unit of the imaging device according to any one of configurations 1 to 14.

### (Medium)

A storage medium storing a program that causes a computer to function as each unit of the imaging device according to any one of configurations 1 to 14.

The present invention is not limited to the embodiment described above, and various modifications and amendments may be implemented thereon without departing from the spirit and scope of the present invention. Accordingly, the following claims are attached in order to publicize the scope of the present invention.

The present application claims priority on the basis of Japanese Patent Application No. 2023-096364, filed on June 12, 2023, and all of the contents disclosed therein are included by reference.

### [Reference Signs List]

- 100: Digital camera
- 22: Imaging unit
- 50: System control unit
- 24: Image processing unit

## Claims

1. An imaging device comprising:
an imaging unit; and
an AE unit configured to perform automatic exposure processing,
wherein the AE unit stops the automatic exposure processing in a case where an object approaching the imaging device is captured by the imaging unit.

2. The imaging device according to claim 1, wherein the AE unit stops the automatic exposure processing in response to that the object approaches the imaging device within an imaging range of the imaging unit, and resumes, after the automatic exposure processing is stopped, the automatic exposure processing in response to that the object moves out of the imaging range or the object moves away from the imaging device.

3. The imaging device according to claim 1, wherein the AE unit stops the automatic exposure processing in a case where a distance between the object captured by the imaging unit and the imaging device is shorter than a first threshold value.

4. The imaging device according to claim 1, wherein the AE unit stops the automatic exposure processing in a case where a distance between the object captured by the imaging unit and the imaging device is shorter than a second threshold value and the distance decreases.

5. The imaging device according to claim 4, wherein the AE unit does not stop the automatic exposure processing in a case where the distance between the object captured by the imaging unit and the imaging device is shorter than the second threshold value but the distance does not decrease.

6. The imaging device according to claim 1, wherein the AE unit performs the automatic exposure processing in a case where a distance between the object captured by the imaging unit and the imaging device is longer than a second threshold value.

7. The imaging device according to claim 1, further comprising an AF unit configured to perform autofocus processing,
wherein the AE unit stops the automatic exposure processing in a case where time during which the autofocus processing fails is longer than a third threshold value.

8. The imaging device according to claim 1, further comprising a detection unit configured to detect a specific subject from an imaging range of the imaging unit,
wherein the AE unit does not stop the automatic exposure processing in a case where the specific subject is detected by the detection unit.

9. The imaging device according to claim 8, wherein the specific subject is a face.

10. The imaging device according to claim 1, further comprising a setting unit configured to set, in response to a user operation, any one of a plurality of modes including a first mode in which the automatic exposure processing is stopped in a case where the object approaching the imaging device is captured and a second mode in which the automatic exposure processing is not stopped in a case where the object approaching the imaging device is captured.

11. The imaging device according to claim 1, further comprising a control unit configured to, in a case where the AE unit stops the automatic exposure processing, perform control to issue a predetermined notification.

12. The imaging device according to claim 1, wherein the AE unit does not stop the automatic exposure processing in a case where a moving image is not shot by the imaging unit.

13. The imaging device according to claim 1, wherein, in a case where the object approaching the imaging device is captured by the imaging unit but the object approaches the imaging device outside a predetermined range which is a part of an imaging range of the imaging unit, the AE unit does not stop the automatic exposure processing.

14. The imaging device according to claim 13, wherein the predetermined range is a range of a target of the automatic exposure processing.

15. A method for controlling an imaging device, comprising:
an imaging step of performing image capturing; and
an AE step of performing automatic exposure processing,
wherein in the AE step, the automatic exposure processing is stopped in a case where an object approaching the imaging device is captured in the imaging step.

16. A program that causes a computer to function as each unit of the imaging device according to any one of claims 1 to 14.

17. A storage medium storing a program that causes a computer to function as each unit of the imaging device according to any one of claims 1 to 14.
